# EUROPEAN PATENT APPLICATION

(11) **EP 4 043 258 A1**
(43) Date of publication of application: **17.08.2022**
(21) Application number: 20874086.0
(22) Date of filing: 18.08.2020
(51) Int. Cl.: B60K 11/00, H01M 10/613, H01M 10/625, H01M 10/627, H01M 10/647, H01M 10/653, H01M 10/6554, H01M 10/6556, H01M 10/6567, H01M 50/20

(54) **POWER SUPPLY DEVICE, ELECTRIC VEHICLE USING SAME, AND POWER STORAGE DEVICE**

(30) Priority: 09.10.2019 JP 2019185998
(71) Applicant: SANYO Electric Co., Ltd., Kadoma-shi, Osaka 571-8501 (JP)
(72) Inventor: TAKAHASHI Hiroyuki, Osaka-shi, Osaka 540-6207 (JP)
(74) Representative: Novagraaf International SA
(86) International application number: PCT/JP2020/031043
(87) International publication number: WO 2021/070478

(57) **Abstract**

To reduce frictional resistance between an upper surface of a heat transfer sheet and a bottom surface of a battery cell to enable smooth sliding with a heat transfer state between the battery cell and the heat transfer sheet being maintained, a power supply device includes a plurality of battery cells (1) each including an outer covering can in a prismatic shape, a pair of end plates (3) that cover both end surfaces of a battery stack in which the plurality of battery cells (1) are stacked, a plurality of bind bars each formed into a plate shape extending in a stacking direction of the plurality of battery cells (1), the plurality of bind bars being respectively disposed on opposite side surfaces of the battery stack to fasten end plates (3) to each other, heat radiation plate (9) placing the battery stack on its upper surface side for releasing heat from the battery stack, and heat transfer sheet (6) interposed between an upper surface of heat radiation plate (9) and a lower surface of the battery stack to bring heat radiation plate (9) and the battery stack into a thermally coupled state, wherein low friction slide layer (7) with a friction resistance smaller than a friction resistance of the upper surface of heat transfer sheet (6) is provided between heat transfer sheet (6) and the plurality of battery cells (1).

## Description

### TECHNICAL FIELD

The present invention relates to a power supply device and an electric vehicle and power storage device including the power supply device.

### BACKGROUND ART

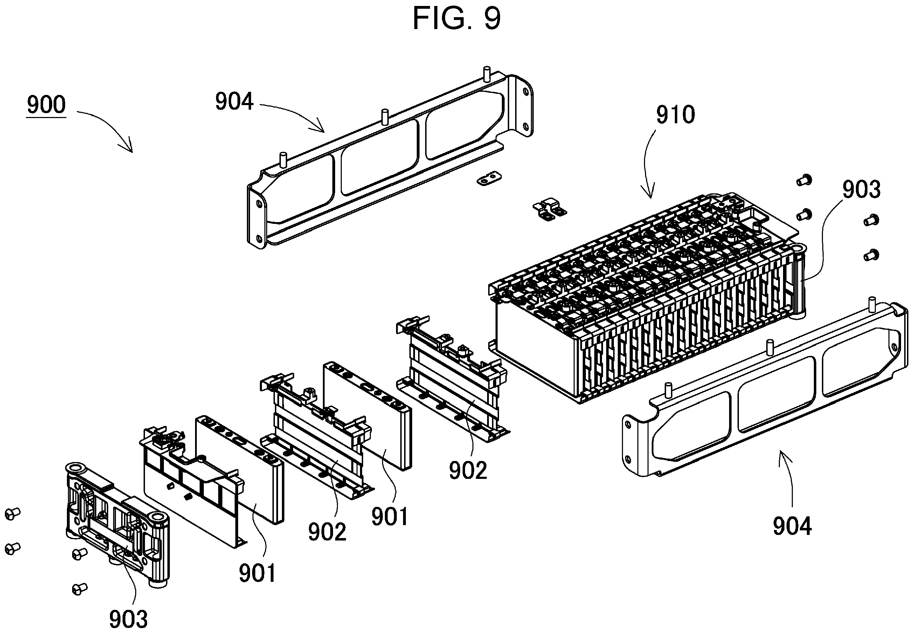

A power supply device is used as a power supply device for driving an electric vehicle, a power supply device for power storage, or the like. In such a power supply device, a plurality of chargeable and rechargeable battery cells are stacked. It is known that an outer covering can of a battery cell swells due to charging and discharging. Therefore, a battery stack in which a plurality of battery cells are stacked is fastened and held in a compressed state. As shown in a perspective view of Fig. 9, power supply device 900 typically includes battery stack 910 in which battery cells 901 with prismatic outer covering cans are alternately stacked with insulating spacers 902, end plates 903 respectively disposed on both end surfaces of battery stack 910, and bind bars 904 made of metal fastening end plates 903 to each other (see PTL 1).

Because the battery stack in such a power supply device generates heat due to charging and discharging, a power supply device provided with a heat radiation mechanism has also been developed. As such a power supply device, there is disclosed a structure in which a heat radiation plate is disposed on a lower surface of a battery stack with a heat transfer sheet interposed therebetween (see PTL 2).

### Citation List

### Patent Literatures

PTL 1: Unexamined Japanese Patent Publication No. 2015-84331
PTL 2: Unexamined Japanese Patent Publication No. 2011-34775

### SUMMARY OF THE INVENTION

### Technical problem

In this power supply device, heat generated from the battery cells is transferred to the heat radiation plate via the heat transfer sheet, and therefore heat generated from the battery cells can be efficiently transferred from their bottom surfaces to the heat radiation plate to be released. On the other hand, because the frictional resistance between the bottom surfaces of the battery cells and the heat transfer sheet increases, there is a problem that it is difficult to quickly stack a large number of battery cells in the assembly process of the power supply device.

The present invention has been developed to solve the above-described problem, and an object of the present invention is to provide a technique capable of reducing the frictional resistance between the upper surface of the heat transfer sheet and the bottom surfaces of the battery cells with the heat transfer state between the battery cells and the heat transfer sheet being maintained, and smoothly sliding the battery cells with respect to the heat transfer sheet to improve the work efficiency, for example, at the time of assembling the battery stack.

### Solutions to problem

A power supply device according to an aspect of the present invention includes a plurality of battery cells each including an outer covering can in a prismatic shape, a pair of end plates that cover both end surfaces of a battery stack in which the plurality of battery cells are stacked, a plurality of bind bars each formed into a plate shape extending in a stacking direction of the plurality of battery cells, the plurality of bind bars being respectively disposed on opposite side surfaces of the battery stack to fasten the end plates to each other, a heat radiation plate placing the battery stack on its upper surface side for releasing heat from the battery stack, and a heat transfer sheet interposed between an upper surface of the heat radiation plate and a lower surface of the battery stack to bring the heat radiation plate and the battery stack into a thermally coupled state, wherein a low friction slide layer with a friction resistance smaller than a friction resistance of the upper surface of the heat transfer sheet is provided between the heat transfer sheet and the plurality of battery cells.

An electric vehicle according to an aspect of the present invention includes the above power supply device, a motor for traveling supplied with electric power from the power supply device, a vehicle body equipped with the power supply device and the motor, and a wheel driven by the motor to cause the vehicle body to travel.

A power storage device according to an aspect of the present invention includes the above power supply device, and a power supply controller that controls charging and discharging of the power supply device, wherein the power supply controller enables charging of the plurality of battery cells with electric power from outside, and controls charging to be performed on the plurality of battery cells.

### Advantageous effect of invention

The power supply device described above is capable of reducing the frictional resistance between the upper surface of the heat transfer sheet and the bottom surface of the battery cell with the heat transfer state between the battery cell and the heat transfer sheet being maintained and smoothly sliding the battery cell with respect to the heat transfer sheet to improve the work efficiency, for example, at the time of assembling the battery stack.

### BRIEF DESCRIPTION OF THE DRAWINGS

Fig. 1 is a perspective view of a power supply device according to an exemplary embodiment of the present invention.
Fig. 2 is an exploded perspective view of the power supply device shown in Fig. 1.
Fig. 3 is an exploded perspective view of the power supply device shown in Fig. 1 as viewed from diagonally below.
Fig. 4 is a partially enlarged cross-sectional view taken along line IV-IV of the power supply device shown in Fig. 1.
Fig. 5 is a partially enlarged cross-sectional view taken along line V-V of the power supply device shown in Fig. 1.
Fig. 6 is a block diagram showing an example in which a power supply device is mounted on a hybrid vehicle that travels with an engine and a motor.
Fig. 7 is a block diagram showing an example in which a power supply device is mounted on an electric automobile vehicle that travels only with a motor.
Fig. 8 is a block diagram showing an example of applying a power supply device for power storage.
Fig. 9 is an exploded perspective view of a conventional power supply device.

### DESCRIPTION OF EMBODIMENT

An exemplary embodiment of the present invention may be specified by the following configuration.

A power supply device according to a first exemplary embodiment of the present invention includes a plurality of battery cells each including an outer covering can in a prismatic shape, a pair of end plates that cover both end surfaces of a battery stack in which the plurality of battery cells are stacked, a plurality of bind bars each formed into a plate shape extending in a stacking direction of the plurality of battery cells, the plurality of bind bars being respectively disposed on opposite side surfaces of the battery stack to fasten the end plates to each other, a heat radiation plate placing the battery stack on its upper surface side for releasing heat from the battery stack, and a heat transfer sheet interposed between an upper surface of the heat radiation plate and a lower surface of the battery stack to bring the heat radiation plate and the battery stack into a thermally coupled state, wherein a low friction slide layer with a friction resistance smaller than a friction resistance of the upper surface of the heat transfer sheet is provided between the heat transfer sheet and the plurality of battery cells.

The above power supply device is provided with the low friction slide layer having a frictional resistance smaller than that of the upper surface of the heat transfer sheet between the heat transfer sheet and the battery cells. Therefore, a plurality of battery cells placed on the upper surface side of the heat transfer sheet can slide more smoothly with respect to the upper surface of the heat transfer sheet, and a large number of battery cells can be efficiently disposed in a stacked state. Therefore, it is possible to improve the work efficiency and decrease the manufacturing cost in the process of stacking a large number of battery cells to form a battery stack.

Further, the above power supply device causes the bottom surfaces of the battery cells to move with a low resistance with respect to the upper surface of the heat transfer sheet even when the plurality of stacked battery cells move in the stacking direction due to thermal shrinkage of the battery cells at the time of charging and discharging the battery cells. Therefore, the above power supply device is capable of preventing deterioration of the thermally coupled state of the battery cells and the heat transfer sheet and maintaining a favorable heat transfer state for a long time.

In a power supply device according to a second exemplary embodiment of the present invention, the heat transfer sheet includes an elastic insulating member.

According to the above configuration, because the heat transfer sheet has elasticity, the heat transfer sheet is deformed along the bottom surfaces of the battery cells in a state of being pressed against the bottom surfaces of the battery cells disposed on the upper surface, and the heat transfer sheet and the battery cells can be thermally coupled in an ideal state.

In a power supply device according to a third exemplary embodiment of the present invention, the low friction slide layer is a slide sheet with a frictional resistance smaller than a frictional resistance of the heat transfer sheet, the slide sheet being interposed between the heat transfer sheet and the battery stack.

According to the above configuration, because the slide sheet having a frictional resistance smaller than that of the heat transfer sheet is disposed between the heat transfer sheet and the battery stack as the low friction slide layer, the low friction slide layer can be easily formed on the upper surface of the heat transfer sheet.

In a power supply device according to a fourth exemplary embodiment of the present invention, the slide sheet is a flexible sheet.

According to the above configuration, because the slide sheet has flexibility, the bottom surfaces of the battery cells can be brought into contact with the upper surface of the heat transfer sheet in a close contact state and can be reliably thermally coupled with the heat transfer sheet. In particular, when the heat transfer sheet has elasticity, close contact between the bottom surfaces of the battery cells in contact with the heat transfer sheet via the slide sheet and the heat transfer sheet can further improve.

In a power supply device according to a fifth exemplary embodiment of the present invention, the slide sheet is a polyethylene terephthalate film.

According to the above configuration, it is possible to form a low friction slide layer having a frictional resistance smaller than that of the upper surface of the heat transfer sheet in an ideal state with an inexpensive PET film.

In a power supply device according to a sixth exemplary embodiment of the present invention, each of the plurality of battery cells are covered with an insulating film at an outer peripheral surface including at least a bottom surface, and the insulating film is a polyethylene terephthalate film.

According to the above configuration, it is possible to reduce adverse effects such as generation of static electricity at the time of sliding the battery cell by having the insulating film covering the bottom surface of the battery cell and the low friction slide layer formed on the upper surface of the heat transfer sheet made of the same material, which is a PET film.

In a power supply device according to a seventh exemplary embodiment of the present invention, the slide sheet is a graphite sheet.

In a power supply device according to an eighth exemplary embodiment of the present invention, the slide sheet is 20 µm to 100 µm in thickness.

In a power supply device according to a ninth exemplary embodiment of the present invention, the thermal plate includes a refrigerant circulation passage inside.

Hereinafter, an exemplary embodiment of the present invention will be described with reference to the drawings. However, an exemplary embodiment described below is an example for embodying the technical idea of the present invention, and the present invention is not limited to the following. Further, in the present specification, members indicated in the claims are not limited to the members of the exemplary embodiment. In particular, the dimensions, materials, shapes, and the relative dispositions of the constituent members described in the exemplary embodiment are not intended to limit the scope of the present invention only thereto unless otherwise specified, and are merely illustrative examples. The sizes and positional relationships of the members shown in the drawings may be exaggerated for clarity of description. Further, in the following description, the same names and reference numerals indicate the same or similar members, and detailed description will be appropriately omitted. Further, each element constituting the present invention may be configured such that a plurality of elements are configured by the same member and one member also serves as a plurality of elements, or conversely, the function of one member can be shared and achieved by a plurality of members. In addition, the content described in some of examples and exemplary embodiments may be applicable to other examples and exemplary embodiments.

The power supply device according to an exemplary embodiment is used in various applications including a power source to be mounted on a hybrid vehicle, an electric automobile vehicle, or other electric vehicles to supply electric power to a motor for traveling, a power source that stores power generated by natural energy such as solar power generation and wind power generation, and a power source for storing midnight electric power. In particular, the power supply device can be used as a power source suitable for large power and large current applications. In the following example, an exemplary embodiment applied to a power supply device for driving an electric vehicle will be described.

### [First exemplary embodiment]

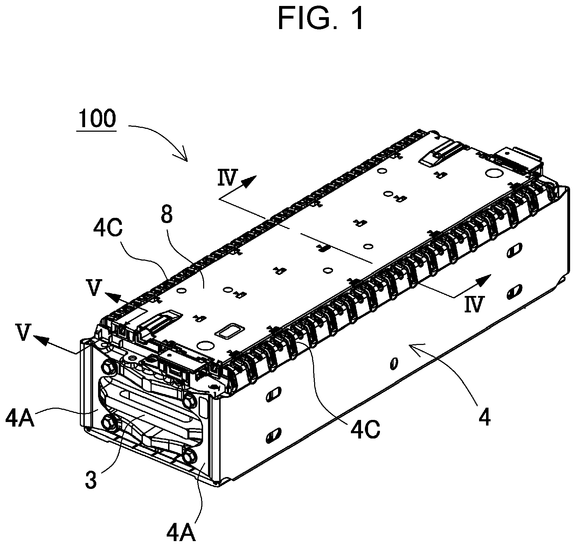

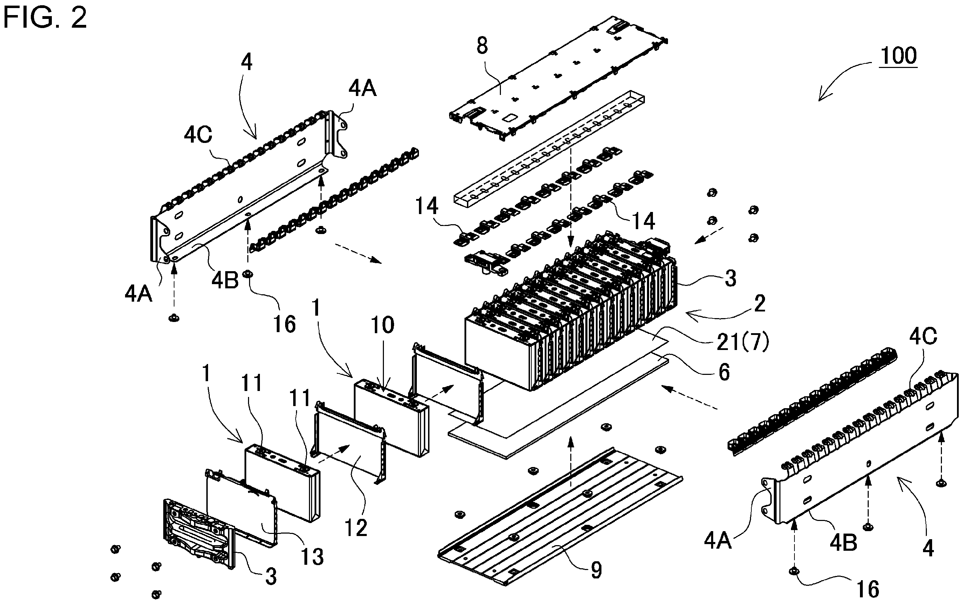

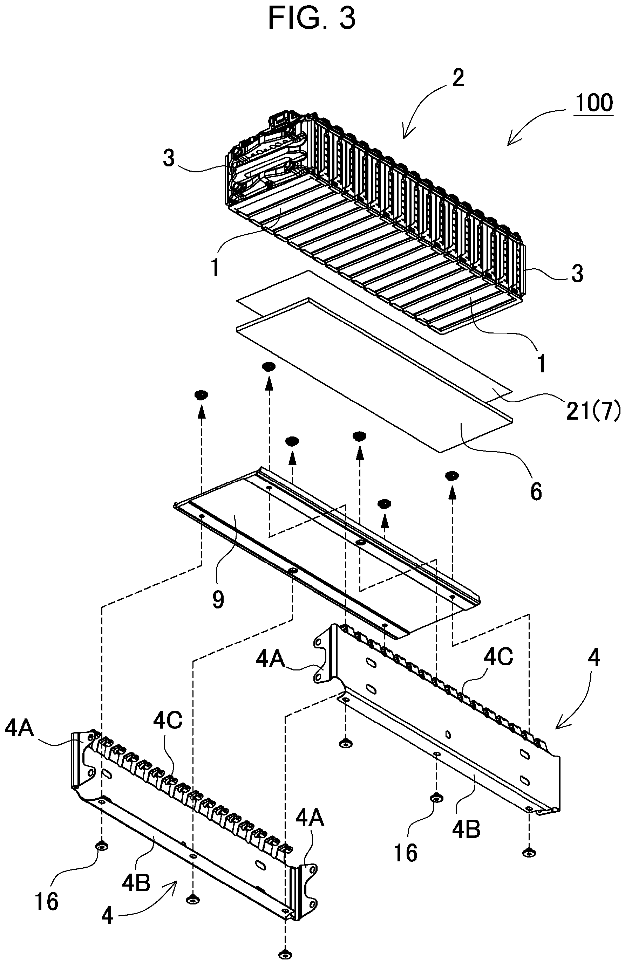

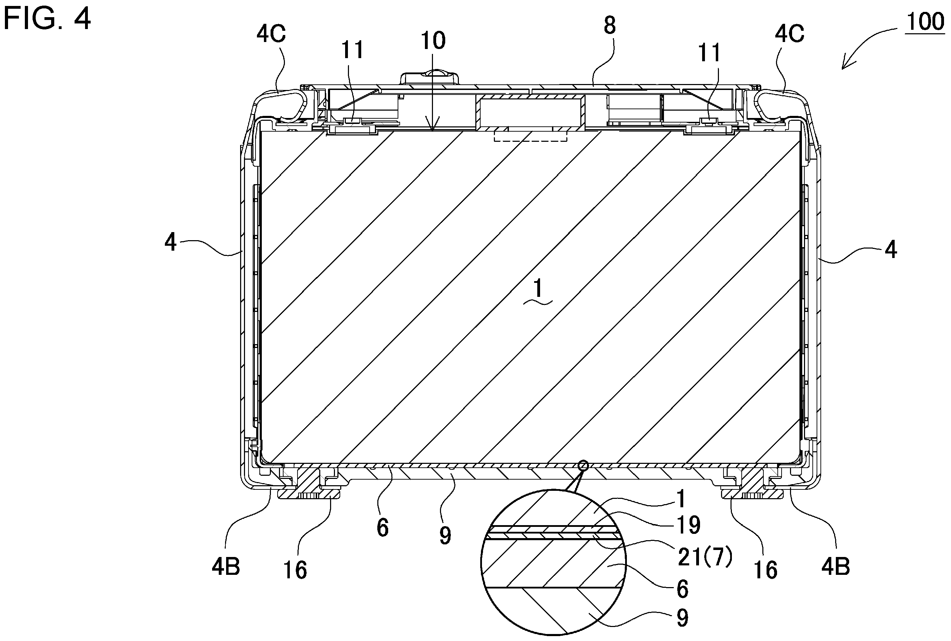

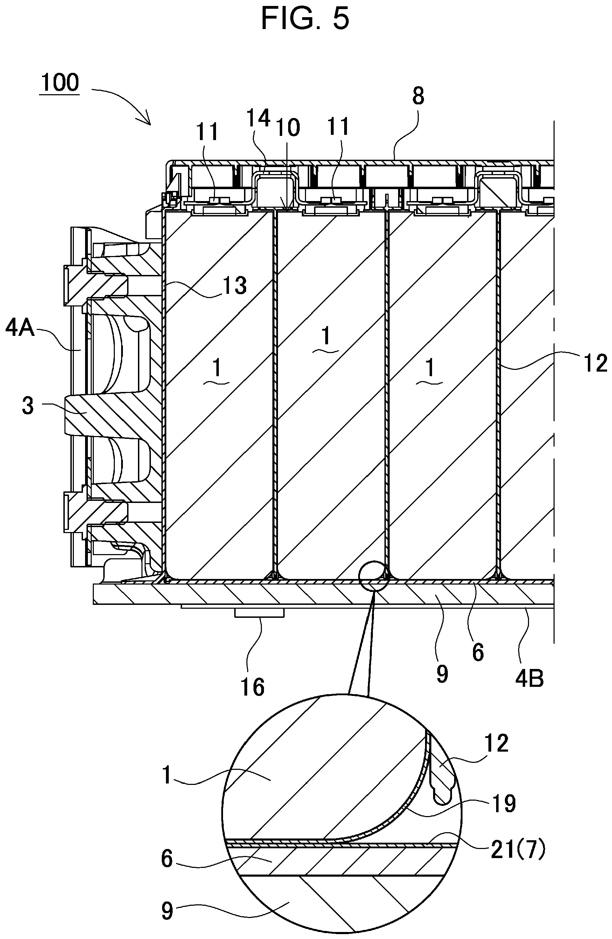

A power supply device according to a first exemplary embodiment of the present invention is shown in Figs. 1 to 5. In these drawings, Fig. 1 is a perspective view of the power supply device, Fig. 2 is an exploded perspective view of the power supply device in Fig. 1 as viewed from diagonally above, Fig. 3 is an exploded perspective view of the power supply device in Fig. 1 as viewed from diagonally below, Fig. 4 is a vertical cross-sectional view taken along line IV-IV of the power supply device in Fig. 1, and Fig. 5 is a vertical cross-sectional view taken along line V-V of the power supply device in Fig. 1.

As shown in Figs. 1 to 5, power supply device 100 includes a plurality of battery cells 1 each including a prismatic outer covering can, a pair of end plates 3 that cover both end surfaces of battery stack 2 in which the plurality of battery cells 1 are stacked, a plurality of bind bars 4 each having a plate shape extending in a stacking direction of the plurality of battery cells 1, the plurality of bind bars being respectively disposed on opposite side surfaces of battery stack 2 to fasten the end plates to each other, heat radiation plate 9 placing battery stack 2 on its upper surface side for releasing heat from battery stack 2, and heat transfer sheet 6 interposed between heat radiation plate 9 and battery stack 2 to bring heat radiation plate 9 and battery stack 2 into a thermally coupled state. Further, power supply device 100 shown in the drawings includes upper surface cover 8 above battery stack 2.

### (Battery cell 1)

Battery cell 1 is a prismatic battery having a constant cell thickness with an outer shape of a main surface, which is a wide surface, being quadrangular, and the thickness is smaller than the width. Battery cell 1 is a secondary battery which can be charged and discharged, and it is a lithium ion secondary battery. In the present invention, however, the battery cell is neither limited to a prismatic battery nor to a lithium ion secondary battery. As the battery cell, all chargeable batteries such as non-aqueous electrolyte secondary batteries other than lithium ion secondary batteries and nickel metal hydride battery cells can also be used.

In battery cell 1, an electrode body in which positive and negative electrode plates are stacked is housed in an outer covering can, and the outer covering can is filled with an electrolyte and hermetically sealed. The outer covering can is formed into a quadrangular cylindrical shape whose bottom is closed, and has an upper opening that is hermetically closed by a sealing plate of a metal plate. The outer covering can is formed by deep-drawing a metal plate of aluminum, aluminum alloy, or the like. The sealing plate is made of a metal plate of aluminum, aluminum alloy, or the like in the same manner as in the outer covering can. The sealing plate is inserted into the opening of the outer covering can, and a boundary between an outer periphery of the sealing plate and an inner periphery of the outer covering can is irradiated with laser light, whereby the sealing plate is laser-welded to the outer covering can to be hermetically fixed.

In battery cell 1, as shown in Fig. 4 and the like, the sealing plate being a top surface serves as terminal surface 10, and positive and negative electrode terminals 11 are fixed to both ends of terminal surface 10. Each electrode terminal 11 has a protrusion having a circular columnar shape. However, the protrusion is not necessarily in a circular columnar shape and may be in a polygonal columnar shape or an elliptic columnar shape. Positive and negative electrode terminals 11 fixed to the sealing plate of battery cell 1 are positioned where the positive electrode and the negative electrode are bilaterally symmetrical. This enables adjacent battery cells 1 to be connected in series by stacking battery cells 1 in an alternately and horizontally reversed manner and connecting electrode terminals 11 of the positive electrode and the negative electrode that are adjacent and close to each other by bus bars 14, as shown in Fig. 2. Note that the present invention does not specify the number and connection state of the battery cells constituting the battery stack. The number and connection state of the battery cells constituting the battery stack may be modified in various manners, inclusive of other exemplary embodiments described later.

Further, in battery cell 1, a bottom surface and a side surface of the outer covering can are covered with insulating film 19 as shown in partially enlarged views in Figs. 4 and 5. This prevents a short circuit between adjacent battery cells 1 connected in series. As insulating film 19, for example, a heat shrinkable plastic film that shrinks by heating can be used. As insulating film 19, a polyethylene terephthalate film can be used.

### (Battery stack 2)

The plurality of battery cells 1 are stacked to allow the thickness direction of each battery cell 1 to be aligned with the stacking direction to constitute battery stack 2. Each battery cell has one outer peripheral surface of a quadrangle as terminal surface 10 provided with positive and negative electrode terminals 11. The plurality of battery cells 1 are stacked to form battery stack 2 in which terminal surfaces 10 are disposed on the same plane.

As shown in Fig. 2, in battery stack 2, insulating spacer 12 is sandwiched between stacked battery cells 1. Insulating spacer 12 in the drawing is made of an insulating material such as resin formed into a thin plate shape or a sheet shape. Insulating spacer 12 shown in the drawing has a plate shape having substantially the same size as the opposing surface of battery cell 1. Insulating spacer 12 is stacked between adjacent battery cells 1 and insulates adjacent battery cells 1 from each other. As the spacer disposed between adjacent battery cells 1, a spacer having a shape in which a flow path of a cooling gas is formed between the battery cell and the spacer can also be used.

In battery stack 2, bus bars 14 made of metal are connected to positive and negative electrode terminals 11 of adjacent battery cells 1. The plurality of battery cells 1 are connected in series or in parallel or in series and in parallel by bus bars 14. In battery stack 2, the output voltage and the chargeable and dischargeable capacity are set as set values by the number of battery cells 1 to be stacked. Battery stack 2 is capable of increasing the output voltage by the number of battery cells 1 connected in series and increasing the charge and discharge capacity by the number of battery cells 1. In the power supply device, the output voltage and the capacity are set as set values by the number of battery cells 1 constituting battery stack 2 and the connection state of connecting the battery cells in series and in parallel. Therefore, the number and connection state of battery cells 1 are in an optimal state in consideration of the application.

Further, power supply device 100 shown in Fig. 2 is provided with end plates 3 disposed on both end surfaces of battery stack 2. In battery stack 2, end plates 3 can be disposed at both end surfaces of battery stack 2 with end surface spacers 13 interposed between end plates 3 and battery stack 2 to insulate battery stack 2 from end plates 3 made of metal. End surface spacers 13 are disposed between battery stack 2 and end plates 3 to insulate end plates 3 from battery stack 2. Each end surface spacer 13 is made of an insulating material such as resin and formed into a thin plate shape or a sheet shape. End surface spacer 13 is provided with a plate part having a size capable of covering the entire opposing surface of battery cell 1, and this plate part is stacked between battery cell 1 and end plates 3 disposed at both ends of battery stack 2.

### (End plate 3)

End plates 3 are provided at both end surfaces of battery stack 2 in the stacking direction of battery cells 1, and fix battery stack 2 in a pressurized state from both end surfaces in a pressurized state. Each end plate 3 is a plate material made of metal, and it is a quadrangular plate material whose outer shape is substantially equal to the outer shape of battery cell 1 or slightly larger than battery cell 1. End plate 3 can be made of a high tensile strength steel to have a tough structure. End plate 3 may be a single metal plate, may have a structure in which a plurality of metal plates are stacked, or may be a stack of a metal plate and plastic.

### (Bind bar 4)

Bind bars 4 extend in the stacking direction of battery cells 1, have both ends fixed to end plates 3, and fix battery stack 2 with the pair of end plates 3. Each bind bar 4 is a metal plate having a predetermined vertical width along a side surface of battery stack 2 and a predetermined thickness. Bind bars 4 are disposed so as to oppose both side surfaces of battery stack 2. Bind bars 4 pressurize both end surfaces of battery stack 2 with a strong pressure, and dispose battery cells 1 about to swell by charging and discharging at a fixed position. As the metal plate of bind bar 4, a high tensile strength steel is preferably used. Bind bar 4 of metal plate is formed into a predetermined shape by press forming.

As shown in the exploded perspective views in Figs. 2 and 3, to fix both ends of bind bar 4 to the pair of end plates 3, fixing parts 4A bent along the outer surface of end plate 3 are provided at both ends of bind bar 4 in the stacking direction of battery stack 2. Bind bar 4 fastens the pair of end plates 3 by, for example, screwing fixing parts 4A to end plates 3.

Further, as shown in Figs. 2 to 4, a lower end of bind bar 4 is bent into an L shape to form lower coupling piece 4B. Lower coupling piece 4B is stacked on the lower surface at both sides of heat radiation plate 9 and coupled to heat radiation plate 9. Bind bar 4 is bent at an upper end to form pressing pieces 4C that press an end of the upper surface of battery stack 2. Pressing pieces 4C are separated for each battery cell 1 so as to individually press the upper surfaces of battery cells 1 of battery stack 2. This allows each pressing piece 4C to press battery cell 1 toward heat radiation plate 9 independently of adjacent pressing pieces 4C. In this manner, each battery cell 1 is prevented from floating from heat radiation plate 9 and held in the height, and even when vibration, impact, or the like is applied to battery stack 2, each battery cell 1 can be maintained so as not to be displaced in the vertical direction. In this manner, bind bars 4 cover and hold the corners of the upper and lower surfaces of battery stack 2 on both left and right sides of battery stack 2.

As for the shape of bind bar 4 and the structure for fastening with end plates 3, known structures can be appropriately used. For example, both ends of the bind bar may be formed into a flat plate shape without being bent into an L shape and may be screwed with a side surface of the end plate. Alternatively, a part where the bind bar opposes a side surface of the end plate may have an engagement structure to be engaged in a stepped manner, and the bind bar may be further screwed in a state of being locked to the side surface of the end plate with a locking structure.

An insulating sheet may be interposed between bind bar 4 and battery stack 2. The insulating sheet is made of a material having an insulating property such as resin and provides insulation between bind bar 4 made of metal and battery cells 1.

The insulating sheet can be unnecessary when the battery stack or the surface of the battery stack is insulated, for example when the battery cell is housed in an insulating case or covered with a heat-shrinkable film made of resin, when an insulating paint or coating is applied to the surface of the bind bar, or when the bind bar is made of an insulating material. The insulating sheet may also be used as a bus bar holder for holding the above-described bus bar.

### (Heat radiation plate 9)

As shown in Figs. 2 to 5, heat radiation plate 9 is disposed on the bottom surfaces of battery stack 2 and end plate 3. Heat radiation plate 9 release heat of battery stack 2 placed on the upper surface of heat radiation plate 9 via heat transfer sheet 6. As heat radiation plate 9, a heat radiation plate or the like made of metal having excellent heat transfer property can be used. Heat radiation plate 9 in the drawing fixes the lower end of bind bar 4. Heat radiation plate 9 is fixed to bind bar 4 via fixing screw 16. Fixing screw 16 for fixing bind bar 4 penetrates lower coupling piece 4B, which is the lower end of bind bar 4, and is fixed to heat radiation plate 9. Heat radiation plate 9 may include a cooling mechanism such as a refrigerant circulation passage inside. This enables efficient heat release and cooling of battery stack 2 by refrigerant cooling and enables battery stack 2 and heat radiation plate 9 to preferably maintain their thermally coupled state by heat transfer sheet 6.

### (Heat transfer sheet 6)

Heat transfer sheet 6 is interposed between heat radiation plate 9 and battery stack 2 to stabilize the thermally coupled state of heat radiation plate 9 and battery stack 2. As a result, when battery stack 2 generates heat due to charging and discharging of battery cells 1, the heat is transferred to heat radiation plate 9 through heat transfer sheet 6 and released. Heat transfer sheet 6 is made of a material having excellent heat transfer property with an insulating property. Heat transfer sheet 6 has elasticity or flexibility, is pressed and deformed between heat radiation plate 9 and battery stack 2, and is brought into close contact without a gap at interfaces between heat radiation plate 9 and battery stack 2 to be in a thermally coupled state. As such heat transfer sheet 6, a silicone resin or the like can be suitably used. In addition, a filler such as aluminum oxide may be added to increase the heat transfer property.

Preferably, heat transfer sheet 6 is disposed so as to oppose substantially the entire bottom surface of battery stack 2 to improve the thermally coupled state of battery stack 2 and heat radiation plate 9. In this manner, heat transfer sheet 6 disposed so as to oppose substantially the entire surface of battery stack 2 can increase a contact area with each battery cell 1, thereby enabling favorable heat transfer between each battery cell 1 and the heat radiation plate. However, when the contact area between the bottom surface of battery cell 1 and heat transfer sheet 6 is increased to have a favorable thermally coupled state, frictional resistance between battery cell 1 and heat transfer sheet 6 increases, and it becomes difficult to slide battery cell 1 with respect to heat transfer sheet 6.

In the structure in which a large number of battery cells 1 are stacked to form battery stack 2, in its manufacturing process, heat transfer sheet 6 is laid on the upper surface of heat radiation plate 9, and then a large number of battery cells 1 are lined up in the thickness and stacked on the upper surface of heat transfer sheet 6. In this process, to adjust a distance between battery cells 1 adjacent to each other or to adjust a relative position with respect to end plates 3 to be stacked on both end surfaces of battery stack 2, battery cell 1 is finely adjusted by shifting it position with respect to heat transfer sheet 6 in some cases. In such a case, fine adjustment can be smoothly performed by sliding battery cell 1 with respect to heat transfer sheet 6. However, because battery cell 1 has a close contact state at its contact surface with heat transfer sheet 6 to achieve favorable thermal coupling, frictional resistance with heat transfer sheet 6 is large, and it is difficult to smoothly slide battery cell 1. In particular, because the heat transfer of battery cell 1 can be improved by increasing the contact area with heat transfer sheet 6, this further increases the frictional resistance, and the battery cell 1 cannot slide smoothly.

In addition, a sheet preferably employed as heat transfer sheet 6 has a surface that is easily elastically deformed and has stickiness in addition to the physical properties with a high thermal conductivity, to bring heat transfer sheet 6 into surface contact with the bottom surface of battery cell 1 without a gap. However, such heat transfer sheet 6 has large frictional resistance with the bottom surface of battery cell 1, and therefore it is more difficult to smoothly slide battery cell 1 on the top surface of heat transfer sheet 6. That is, the smooth sliding of battery cell 1 with respect to heat transfer sheet 6 and the favorable heat transfer between battery cell 1 and heat transfer sheet 6 conflict, and both could not be satisfied at the same time.

Therefore, in the power supply device of the present invention, to enable smooth sliding of battery cell 1 with respect to heat transfer sheet 6, low friction slide layer 7 having a frictional resistance smaller than that of the upper surface of heat transfer sheet 6 is provided between heat transfer sheet 6 and battery stack 2 thereby reducing the frictional resistance of battery cell 1 with respect to the upper surface of heat transfer sheet 6. Hereinafter, low friction slide layer 7 will be described in detail.

### (Low friction slide layer 7)

As shown in partially enlarged views in Figs. 4 and 5, in power supply device 100, low friction slide layer 7 having a frictional resistance smaller than that of the upper surface of heat transfer sheet 6 is provided between heat transfer sheet 6 and battery cell 1. Low friction slide layer 7 maintains the heat transfer state between heat transfer sheet 6 and battery cell 1 while reducing the frictional resistance between heat transfer sheet 6 and battery cell 1. As such low friction slide layer 7, as shown in Figs. 2 and 3 for example, slide sheet 21 as a separate member is disposed on the upper surface of heat transfer sheet 6. Slide sheet 21 shown in the drawings is stacked over substantially the entire upper surface of heat transfer sheet 6, and can reduce frictional resistance while preventing the bottom surface of battery cell 1 and the upper surface of heat transfer sheet 6 from coming into direct contact with each other.

Slide sheet 21 is made of a material having a less frictional resistance than that of heat transfer sheet 6. Further, slide sheet 21 is preferably a sheet material having flexibility. As such a slide sheet, for example, a polyethylene terephthalate (PET) film is preferable, and a biaxially stretched polyethylene terephthalate film is particularly suitable. In particular, when an outer peripheral surface including at least the bottom surface of battery cell 1 is covered with insulating film 19 made of a polyethylene terephthalate film to be insulated, it is possible to achieve a feature capable of reducing adverse effects such as generation of static electricity during sliding of battery cell 1 by having insulating film 19 of battery cell 1 and slide sheet 21 made of the same material, which is a PET film. Furthermore, as the slide sheet, a plastic sheet such as polyvinyl chloride (PVC) or a graphite sheet can be used instead of a polyethylene terephthalate (PET) film.

Making slide sheet 21 thin can increase the thermal conductivity between heat transfer sheet 6 and battery cell 1. However, if slide sheet 21 is too thin, slide sheet 21 may be wrinkled when battery cell 1 is caused to slide on the upper surface of heat transfer sheet 6. Therefore, the thickness of slide sheet 21 is more than or equal to 20 µm, preferably more than or equal to 30 µm. Making slide sheet 21 thick can suppress generation of wrinkles and can achieve a smooth sliding of battery cell 1. However, when slide sheet 21 is too thick, the thermal conductivity between heat transfer sheet 6 and battery cell 1 decreases, and heat cannot be efficiently released. Therefore, the thickness of slide sheet 21 is less than or equal to 100 µm, preferably less than or equal to 60 µm, and more preferably less than or equal to 50 µm.

Slide sheet 21 having flexibility and formed to have a thickness in the above range is fixed in a state of being stacked on the upper surface of heat transfer sheet 6. In particular, when heat transfer sheet 6 has elasticity or has stickiness on its surface, heat transfer sheet 6 is stacked in close contact with the surface of heat transfer sheet 6. Slide sheet 21 is bonded and fixed to the upper surface of heat transfer sheet 6, or is stacked in a close contact state with the upper surface due to the stickiness of the surface of heat transfer sheet 6 without bonding.

Above low friction slide layer 7 can be easily provided by laying slide sheet 21 on the upper surface of heat transfer sheet 6. However, the low friction slide layer may be a covering layer provided by performing surface treatment or processing such as fluororesin coating on the upper surface of the heat transfer sheet without providing the slide sheet. Such a covering layer may be provided not only on the upper surface of the heat transfer sheet but also on the bottom surface of the battery cell. Further, the covering layer may be provided by performing surface treatment or processing such as fluororesin coating on the surface of the slide sheet.

Furthermore, as low friction slide layer 7, a lubricant such as grease or oil may be applied to the upper surface of slide sheet 21 or the bottom surface of battery cell 1. These grease and oil are lost over time and have no long-term effect, but by using them in a process of assembling the battery stack, it is possible to more smoothly slide the battery cell and improve work efficiency at the time of assembly.

Above power supply device 100 can be used as a power source for a vehicle that supplies electric power to a motor that enables an electric vehicle to travel. As an electric vehicle equipped with power supply device 100, an electric vehicle such as a hybrid automobile vehicle or a plug-in hybrid automobile vehicle that travels with both an engine and a motor, or an electric automobile vehicle that travels only with a motor can be used, and the power supply device is used as a power source for these vehicles. An example will be described in which a large-capacity, high-output power supply device in which a large number of power supply devices 100 described above are connected in series or in parallel to obtain electric power for driving an electric vehicle and a necessary controlling circuit is further added is constructed.

### (Power supply device for hybrid vehicle)

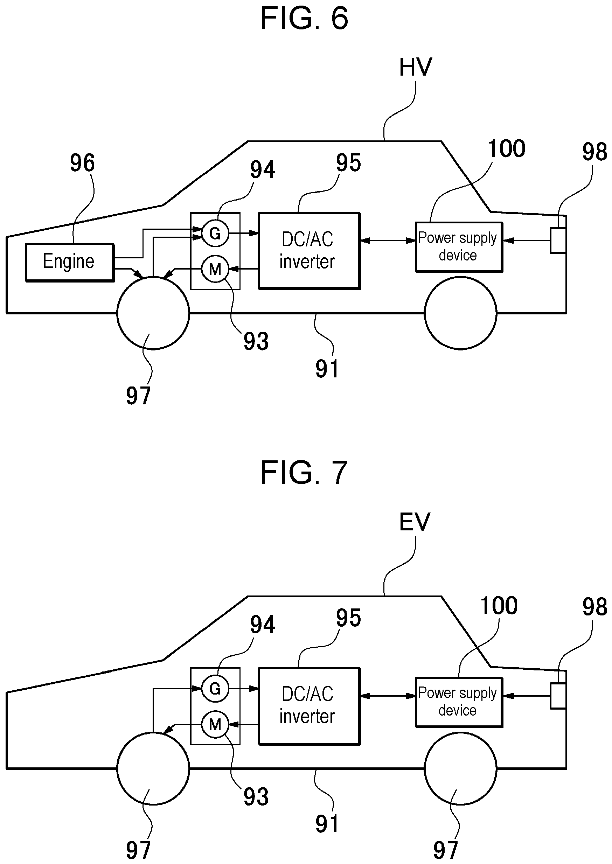

Fig. 6 shows an example in which power supply device 100 is mounted on a hybrid automobile vehicle that travels with both an engine and a motor. Vehicle HV equipped with power supply device 100 shown in this drawing includes vehicle main body 91, engine 96 and motor 93 for traveling that cause vehicle main body 91 to travel, wheels 97 that are driven by engine 96 and motor 93 for traveling, power supply device 100 that supplies electric power to motor 93, and power generator 94 that charges the battery of power supply device 100. Power supply device 100 is connected to motor 93 and power generator 94 via DC/AC inverter 95. Vehicle HV travels using both motor 93 and engine 96 while charging and discharging the battery of power supply device 100. Motor 93 is driven in a region where an engine efficiency is low, for example, during acceleration or low-speed traveling, and causes the vehicle to travel. Motor 93 is driven by electric power supplied from power supply device 100. Power generator 94 is driven by engine 96 or driven by regenerative braking acquired when breaking is applied to the vehicle and charges the battery of power supply device 100. As shown in Fig. 6, vehicle HV may include charging plug 98 for charging power supply device 100. Connecting charging plug 98 to an external power source enables charging of power supply device 100.

### (Power supply device for electric automobile vehicle)

Fig. 7 shows an example in which power supply device 100 is mounted on an electric automobile vehicle that travels only with a motor. Vehicle EV equipped with power supply device 100 shown in this drawing includes vehicle main body 91, motor 93 for traveling that causes vehicle main body 91 to travel, wheels 97 that are driven by motor 93, power supply device 100 that supplies electric power to motor 93, and power generator 94 that charges the battery of power supply device 100. Power supply device 100 is connected to motor 93 and power generator 94 via DC/AC inverter 95. Motor 93 is driven by electric power supplied from power supply device 100. Power generator 94 is driven by the energy at the time of applying regenerative braking to vehicle EV and charges the battery of power supply device 100. Vehicle EV includes charging plug 98, and power supply device 100 can be charged by connecting charging plug 98 to an external power source.

### (Power supply device for power storage device)

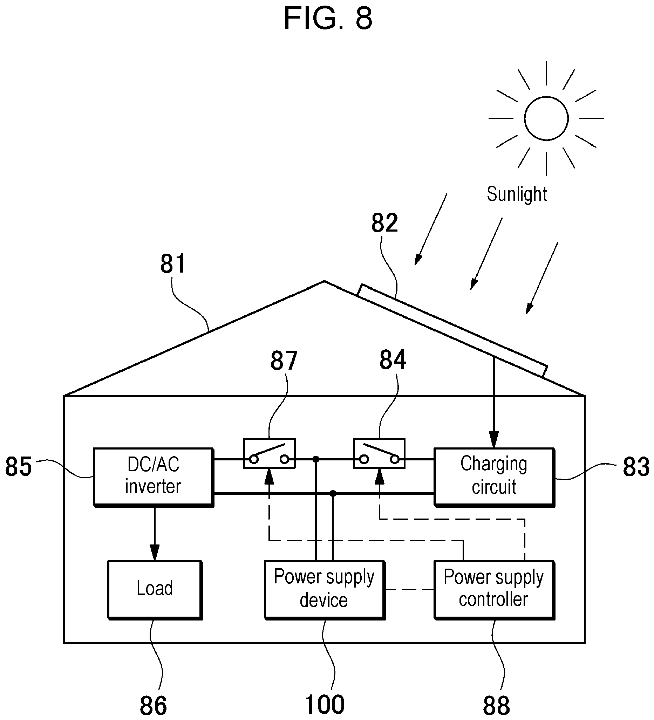

Further, the present invention does not limit the application of the power supply device to a power source for a motor that causes a vehicle to travel. The power supply device according to the exemplary embodiment can be used as a power source for a power storage device that performs power storage by charging a battery with electric power generated by solar power generation, wind power generation, or other methods. Fig. 8 shows a power storage device that performs power storage by charging the battery of power supply device 100 with solar battery 82.

The power storage device shown in Fig. 8 charges the battery of power supply device 100 with electric power generated by solar battery 82 that is disposed, for example, on a roof or a rooftop of building 81 such as a house or a factory. This power storage device charges the battery of power supply device 100 via charging circuit 83 using solar battery 82 as a charging power source, and then supplies electric power to load 86 via DC/AC inverter 85. Thus, this power storage device includes a charge mode and a discharge mode. In the power storage device shown in the drawing, DC/AC inverter 85 is connected to power supply device 100 via discharging switch 87 and charging circuit 83 is connected to power supply device 100 via charging switch 84. Discharging switch 87 and charging switch 84 are turned on and off by power supply controller 88 of the power storage device. In the charge mode, power supply controller 88 turns on charging switch 84 and turns off discharging switch 87 to allow charging from charging circuit 83 to power supply device 100. When charging is completed and the battery is fully charged or when the battery is in a state where a capacity of a predetermined value or more is charged, power supply controller 88 turns off charging switch 84 and turns on discharging switch 87 to switch the mode to the discharge mode and allows discharging from power supply device 100 to load 86. When necessary, power supply controller 88 can supply electric power to load 86 and charge power supply device 100 simultaneously by turning on charging switch 84 and turning on discharging switch 87.

Although not shown, the power supply device can also be used as a power source of a power storage device that performs power storage by charging a battery using midnight electric power at night. The power supply device that is charged with midnight electric power is charged with the midnight electric power that is surplus electric power generated by a power station, and outputs the electric power during the daytime when an electric power load increases, which can limit peak electric power during the daytime to a small value. The power supply device can also be used as a power source charged with both output of a solar battery and the midnight electric power. This power supply device can efficiently perform power storage using both electric power generated by the solar battery and the midnight electric power effectively in consideration of weather and electric power consumption.

The power storage system as described above can be suitably used in applications including a backup power supply device that can be mounted on a computer server rack, a backup power supply device for wireless base stations for cellular phones and the like, a power storage device combined with a solar battery such as a power storage power source for homes and factories or a power source for street lights, and a backup power supply for traffic lights and traffic indicators on roads.

### INDUSTRIAL APPLICABILITY

The power supply device according to the present invention can be suitably used as a power source for a large current used for a power source of a motor for driving an electric vehicle such as a hybrid vehicle, a fuel cell automobile vehicle, an electric automobile vehicle, or an electric motorcycle. Examples of the power supply device include a power supply device for a plug-in hybrid electric automobile vehicle and a hybrid electric automobile vehicle that can switch between an EV traveling mode and an HEV traveling mode, an electric automobile vehicle, or the like. The power supply device can also be appropriately used for the applications including a backup power supply device that can be mounted on a computer sever rack, a backup power supply device for wireless base stations of cellular phones and the like, a power storage device combined with a solar battery such as a power storage power source for homes and factories or a power source for street lights, and a backup power source for traffic lights.

### REFERENCE MARKS IN THE DRAWINGS

100: power supply device
1: battery cell
2: battery stack
3: end plate
4: bind bar
4A: fixing part
4B: lower coupling piece
4C: pressing piece
6: heat transfer sheet
7: low friction slide layer
8: upper surface cover
9: heat radiation plate
10: terminal surface
11: electrode terminal
12: insulating spacer
13: end surface spacer
14: bus bar
16: fixing screw
19: insulating film
21: slide sheet
81: building
82: solar battery
83: charging circuit
84: charging switch
85: DC/AC inverter
86: load
87: discharging switch
88: power supply controller
91: vehicle body
93: motor
94: power generator
95: DC/AC inverter
96: engine
97: wheel
98: charging plug
900: power supply device
901: battery cell
902: spacer
903: end plate
904: bind bar
910: battery stack
HV, EV: vehicle

## Claims

1. A power supply device comprising:
a plurality of battery cells each including an outer covering can in a prismatic shape;
a pair of end plates that cover both end surfaces of a battery stack in which the plurality of battery cells are stacked;
a plurality of bind bars each formed into a plate shape extending in a stacking direction of the plurality of battery cells, the plurality of bind bars being respectively disposed on opposite side surfaces of the battery stack to fasten the end plates to each other;
a heat radiation plate including an upper surface above which the battery stack is placed to release heat from the battery stack; and
a heat transfer sheet interposed between the upper surface of the heat radiation plate and a lower surface of the battery stack to bring the heat radiation plate and the battery stack into a thermally coupled state,
wherein the power supply device further comprises
a low friction slide layer between the heat transfer sheet and the plurality of battery cells, the low friction slide layer including a friction resistance smaller than a friction resistance of the upper surface of the heat transfer sheet.

2. The power supply device according to Claim 1, wherein the heat transfer sheet includes an elastic insulating member.

3. The power supply device according to Claim 1 or 2, wherein the low friction slide layer is a slide sheet with a frictional resistance smaller than a frictional resistance of the heat transfer sheet, the slide sheet being interposed between the heat transfer sheet and the battery stack.

4. The power supply device according to Claim 3, wherein the slide sheet is a flexible sheet.

5. The power supply device according to Claim 3 or 4, wherein the slide sheet is a polyethylene terephthalate film.

6. The power supply device according to Claim 5, wherein
each of the plurality of battery cells is covered with an insulating film at an outer peripheral surface including at least a bottom surface, and
the insulating film is a polyethylene terephthalate film.

7. The power supply device according to Claim 3 or 4, wherein the slide sheet is a graphite sheet.

8. The power supply device according to any one of Claims 3 to 7, wherein the slide sheet is 20 µm to 100 µm in thickness.

9. The power supply device according to any one of Claims 1 to 8, wherein the heat radiation plate includes a refrigerant circulation passage inside.

10. An electric vehicle comprising the power supply device according to any one of Claims 1 to 9, the electric vehicle comprising:
the power supply device;
a motor for traveling supplied with electric power from the power supply device;
a vehicle body equipped with the power supply device and the motor; and
a wheel driven by the motor to cause the vehicle body to travel.

11. A power storage device comprising the power supply device according to any one of Claims 1 to 9, the power storage device comprising:
the power supply device; and
a power supply controller that controls charging and discharging of the power supply device, wherein the power supply controller enables charging of the plurality of battery cells with electric power from outside, and controls charging to be performed on the plurality of battery cells.
